# EUROPEAN PATENT SPECIFICATION

(11) **EP 3 142 498 B1**
(45) Date of publication and mention of the grant of the patent: **20.06.2018**
(21) Application number: 15718474.8
(22) Date of filing: 22.04.2015
(51) Int. Cl.: A23L 2/56, A23L 2/60, A23L 27/00, A23L 27/20

(54) **SOLUBILIZATION OF A SWEET MODULATOR AND FLAVOR**
LÖSLICHKEIT EINES SÜSSEN MODULATORS UND AROMA
SOLUBILISATION D'UN MODULATEUR SUCRÉ ET ARÔME

(30) Priority: 09.05.2014 US 201461990849 P
(43) Date of publication of application: 22.03.2017
(73) Proprietor: Firmenich SA, 1211 Geneva 8 (CH)
(72) Inventor: BEAUSSOUBRE, Pascal, CH-1211 Geneva 8 (CH); FIEBER, Wolfgang, CH-1211 Geneva 8 (CH)
(74) Representative: Baumgartner Harris, Pauline
(86) International application number: PCT/EP2015/058623
(87) International publication number: WO 2015/169582

(56) References cited:
- WO-A1-2009/029407
- US-A1- 2014 094 453
- US-A1- 2014 271 996
- AMY J. ARTHUR ET AL: "Toxicological evaluation of two flavors with modifying properties: 3-((4-amino-2,2-dioxido-1H-benzo[c][1,2,6] thiadiazin-5-yl)oxy)-2,2-dimethyl-N-propyl propanamide and (S)-1-(3-(((4-amino-2,2-dioxido-1H-benzo[c ][1,2,6]thiadiazin-5-yl)oxy)methyl)piperid in-1-yl)-3-methylbutan-1-one", FOOD AND CHEMICAL TOXICOLOGY, vol. 76, February 2015 (2015-02), pages 33-45, XP055198699, ISSN: 0278-6915, DOI: 10.1016/j.fct.2014.11.018
- "GRAS Flavoring substances 27", , November 2014 (2014-11), XP055198704, Retrieved from the Internet: URL:https://www.femaflavor.org/sites/defau lt/files/Interim GRAS 27 Nov_2014.pdf [retrieved on 2015-06-26]

## Description

### FIELD

The present invention relates to the flavor industry. It concerns more particularly a process for increasing the solubility of flavor ingredients in liquid food and beverages and it also concerns a means of delivering the ingredients.

### BACKGROUND

A flavor and sweet modulating compound: (S)-1-(3-(((4-amino-2,2-dioxido-1*H-*benzo[c][1,2,6]thiadiazin-5-yl)oxy)methyl)piperidin-1-yl)-3-methylbutan-1-one has a solubility limit in water. The use of the compound is contemplated to be used in higher concentration in certain beverages at low pH. Hence it is desirable to improve the solubility or to stabilize the supersaturated state of this compound particularly in aqueous beverages. US 2014/094453 discloses an aqueous solution comprising various sweet taste modulators such as (S)-1-oxy)methyl)piperidin-1-yl)-3-methylbutan-1-one.

WO 2009/029407 discloses a method to stabilize a flavour by addition of anionic and cationic water soluble polymers via the formation of coacervates.

### SUMMARY

Provided herein is a method of making a concentrated solution of (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, comprising adding to an aqueous solution:
a) a food grade polymer that is soluble in water at or above 0.1% by weight at 20 °C to the aqueous solution;
b) a sweetener; and
c) (S)-1-(3-(((4-amino-2,2-dioxido-1*H*-benzo[c][1,2,6]thiadiazin-5-yl)oxy)methyl)piperidin-1-yl)-3-methylbutan-1-one wherein the concentration of (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, is greater than or equal to 1 ppm, by weight of the total weight of the solution, at 3 °C when the pH is less than or equal to 4 or it is greater than or equal to 7 ppm, by weight of the total weight of the solution, at 25 °C when the pH is less than or equal to 4.

Further provided herein is an aqueous solution comprising:
a) (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof;
b) a food grade polymer that is soluble in water at or above 0.1% by weight at 20 °C; and
c) a sweetener; wherein the concentration of S)-1-(3-(((4-amino-2,2-dioxido-1*H-*benzo[c][1,2,6]thiadiazin-5-yl)oxy)methyl)piperidin-1-yl)-3-methylbutan-1-one is greater than or equal to 1 ppm, by weight of the total weight of the solution, at 3 °C when the pH is less than or equal to 4 or it is greater than or equal to 7 ppm, by weight of the total weight of the solution, at 25 °C and the pH is less than or equal to 4.

### BRIEF DESCRIPTION OF THE DRAWINGS

**Figure 1** displays the concentration of (S)-1-(3-(((4-amino-2,2-dioxido-1*H-*benzo[c][1,2,6]thiadiazin-5-yl)oxy)methyl)piperidin-1-yl)-3-methylbutan-1-one with and without Polyvinylpyrrolidone (PVP) in a syrup (34 Brix) over 12 weeks at 3 °C.
**Figure 2** displays the concentration of (S)-1-(3-(((4-amino-2,2-dioxido-1*H-*benzo[c][1,2,6]thiadiazin-5-yl)oxy)methyl)piperidin-1-yl)-3-methylbutan-1-one with and without PVP and maltodextrin 18DE in a syrup (34 Brix) over 12 weeks at 3 °C.
**Figure 3** displays the concentration of (S)-1-(3-(((4-amino-2,2-dioxido-1*H-*benzo[c][1,2,6]thiadiazin-5-yl)oxy)methyl)piperidin-1-yl)-3-methylbutan-1-one with and without hydroxypropyl methylcellulose (HPMC) in a syrup (34 Brix) over 12 weeks at 3°C.
**Figure 4** displays the concentration of (S)-1-(3-(((4-amino-2,2-dioxido-1*H-*benzo[c][1,2,6]thiadiazin-5-yl)oxy)methyl)piperidin-1-yl)-3-methylbutan-1-one with and without HPMC in a syrup (45 Brix) over 17 weeks at 3 °C.
**Figure 5** displays the concentration of (S)-1-(3-(((4-amino-2,2-dioxido-1*H-*benzo[c][1,2,6]thiadiazin-5-yl)oxy)methyl)piperidin-1-yl)-3-methylbutan-1-one with and without carboxymethylcellulose (CMC) in a syrup (45 Brix) over 16 weeks at 3 °C.
**Figure 6** displays the concentration of (S)-1-(3-(((4-amino-2,2-dioxido-1*H-*benzo[c][1,2,6]thiadiazin-5-yl)oxy)methyl)piperidin-1-yl)-3-methylbutan-1-one with and without HPMC in a syrup (20 Brix) over 18 weeks at 3 °C.

### DETAILED DESCRIPTION

For the descriptions herein and the appended claims, the use of "or" means "and/or" unless stated otherwise. Similarly, "comprise," "comprises," "comprising" "include," "includes," and "including" are interchangeable and not intended to be limiting.

It is to be further understood that where descriptions of various embodiments use the term "comprising," those skilled in the art would understand that in some specific instances, an embodiment can be alternatively described using language "consisting essentially of" or "consisting of."

Further provided herein is a method of making a concentrated solution of (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof comprising:
a) adding a sweetener and acid to water to form a syrup;
b) adding a (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, to the syrup to form a supersaturated solution of (S)-1-(3-(((4-amino-2,2-dioxido-1*H-*benzo[c][1,2,6]thiadiazin-5-yl)oxy)methyl)piperidin-1-yl)-3-methylbutan-1-one, or a salt or solvate thereof; and
c) adding a food grade polymer to any of the steps of a) or b);
to form a concentrated solution comprising the food grade polymer wherein the food grade polymer is soluble at or above 0.1% by weight at 20 °C and the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof in the solution comprising the food polymer is greater than 1 ppm, by weight of the total weight of the solution after 12 weeks at 3 °C at a pH of less than or equal to 4 or greater than 7 ppm at 12 weeks at 20 °C at a pH of less than or equal to 4 .

In another embodiment provided herein is a method comprising:
a) adding a sweetener and acid to water to form a syrup;
b) adding an aqueous solution of (S)-1-(3-(((4-amino-2,2-dioxido-1*H-*benzo[c][1,2,6]thiadiazin-5-yl)oxy)methyl)piperidin-1-yl)-3-methylbutan-1-one or an equivalent amount of the of a solid salt of the compound is added to the syrup to form a supersaturated solution of (S)-1-(3-(((4-amino-2,2-dioxido-1*H*-benzo[c][1,2,6] thiadiazin-5-yl)oxy)methyl)piperidin-1-yl)-3-methylbutan-1-one:
c) adding a food grade polymer to any one of :
   i) the concentrated solution of (S)-1-(3-(((4-amino-2,2-dioxido-1*H-*benzo[c][1,2,6]thiadiazin-5-yl)oxy)methyl)piperidin-1-yl)-3-methylbutan-1-one the solid salt of (S)-1-(3-(((4-amino-2,2-dioxido-1*H*-benzo[c][1,2,6]thiadiazin-5-yl)oxy)methyl)piperidin-1-yl)-3-methylbutan-1-one; or
   ii) the syrup of steps a or b;
to form a concentrated solution comprising the food grade polymer wherein the food grade polymer is soluble at or above 0.1% by weight at 20 °C and the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one in the concentrated solution comprising the food polymer is greater than 1 ppm, by weight of the total weight of the solution after 12 weeks at 3 °C at a pH of less than or equal to 4 or greater than 7 ppm at 12 weeks at 20 °C at a pH of less than or equal to 4.

Further provided herein is a method of making a concentrated solution of (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, comprising adding to an aqueous solution:
a) a food grade polymer that is soluble in water at or above 1% by weight at 20 °C to the aqueous solution;
b) a sweetener; and
c) (S)-1-(3-(((4-amino-2,2-dioxido-1*H*-benzo[c][1,2,6]thiadiazin-5-yl)oxy)methyl)piperidin-1-yl)-3-methylbutan-1-one wherein the concentration of (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, is greater than or equal to 1 ppm, by weight of the total weight of the solution, at 3 °C when the pH is less than or equal to 4 or it is greater than or equal to 7 ppm, by weight of the total weight of the solution, at 25 °C when the pH is less than or equal to 4.

Further provided herein is an aqueous solution comprising:
a) (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof;
b) a food grade polymer that is soluble in water at or above 1% by weight at 20 °C; and
c) a sweetener; wherein the concentration of S)-1-(3-(((4-amino-2,2-dioxido-1*H-*benzo[c][1,2,6]thiadiazin-5-yl)oxy)methyl)piperidin-1-yl)-3-methylbutan-1-one is greater than or equal to 1 ppm, by weight of the total weight of the solution, at 3 °C when the pH is less than or equal to 4 or it is greater than or equal to 7 ppm, by weight of the total weight of the solution, at 25 °C and the pH is less than or equal to 4.

In another embodiment, a concentrated solution comprises greater than 9 ppm of the (S)-1-(3-(((4-amino-2,2-dioxido-1*H*-benzo[c][1,2,6]thiadiazin-5-yl)oxy)methyl)piperidin-1-yl)-3-methylbutan-1-one, or its salt or solvate thereof, by weight of the total weight of the concentrated solution at a pH of less than or equal to 4.

In another embodiment, a concentrated solution comprises from about 1 ppm to about 100 ppm by weight, of the total weight of the solution, (S)-1-(3-(((4-amino-2,2-dioxido-1*H-*benzo[c][1,2,6]thiadiazin-5-yl)oxy)methyl)piperidin-1-yl)-3-methylbutan-1-one, or a salt or solvate thereof, at a pH of less than or equal to 4 and a temperature of 3°C at 12 weeks.

In another embodiment, a concentrated solution comprises from about 1 ppm to about 45 ppm by weight, of the total weight of the solution, (S)-1-(3-(((4-amino-2,2-dioxido-1*H-*benzo[c][1,2,6]thiadiazin-5-yl)oxy)methyl)piperidin-1-yl)-3-methylbutan-1-one, or a salt or solvate thereof, at a pH of less than or equal to 4 and a temperature of 3°C at 12 weeks.

In another embodiment, a concentrated solution comprises from about 9 ppm to about 35 ppm by weight, of the total weight of the solution, (S)-1-(3-(((4-amino-2,2-dioxido-1*H-*benzo[c][1,2,6]thiadiazin-5-yl)oxy)methyl)piperidin-1-yl)-3-methylbutan-1-one, or a salt or solvate thereof, at a pH of less than or equal to 4 and at a temperature of 3°C or 20°C at 12 weeks.

In another embodiment, a concentrated solution comprises about 15 ppm to about 35 ppm, more particularly from 15 to about 30 ppm, even more particularly at about 18 ppm , by weight, of the total weight of the solution, (S)-1-(3-(((4-amino-2,2-dioxido-1*H-*benzo[c][1,2,6]thiadiazin-5-yl)oxy)methyl)piperidin-1-yl)-3-methylbutan-1-one, or a salt or solvate thereof, at a pH of less than or equal to 4 and at a temperature of 3°C or 20°C at 12 weeks.

In another embodiment, the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or its salt or solvate thereof, in the concentrated solution comprising the food polymer is about 1 ppm up to about 40 ppm , particularly from about 9 ppm to 35 ppm; particularly from about 15 ppm to about 30 ppm by weight of the total weight of the concentrated solution, at a pH of less than or equal to 4.

In a further embodiment, the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or its salt or solvate thereof, in the concentrated solution comprising the food polymer is about from 15 ppm up to about 100 ppm , more particularly from about 30 up to about 100 ppm, more particularly from about 15 ppm to about 30 ppm, more particularly at about 18 ppm, by weight of the total weight of the concentrated solution, at a pH of less than or equal to 4.

The concentrated solution and syrups provided herein are provided in a solution or syrup that has a pH of less than or equal to 4, particularly from about 1.5 to 3, more particularly from about 2 to about 3, and more particularly at about 2.8.

The acids provided here include but are not limited to organic, food grade acids such as carboxylic acids such as citric acid, lactic acid, malic acid, tartric acid, and their corresponding salts, as well as inorganic, food grade acids, particularly phosphoric acid, and its derivatives and their corresponding salts.

In some embodiments, the solutions or syrups provided herein comprise citrate.

In one embodiment provided herein the food grade polymer is selected from the group consisting of polyvinylpyrrolidone, hydroxypropylmethyl cellulose, hydroxypropylcellulose, carboxymethylcellulose, cellulose derivatives, gums, alginates, pectins, agar, Carrageenan, starch and starch derivatives. Particularly the food grade polymer is selected from the group polyvinylpyrrolidone, hydroxypropylmethyl cellulose (HPMC), hydroxypropylcellulose, and carboxymethylcellulose, more particularly the polymer is HPMC and carboxymethylcellulose. In a particular embodiment the gum is selected from the group consisting of xanthan, acacia, arabic, guar, gellan and carrageenan.

In another embodiment, the re-crystallization of (S)-1-(3-(((4-amino-2,2-dioxido-1*H-*benzo[c][1,2,6]thiadiazin-5-yl)oxy)methyl)piperidin-1-yl)-3-methylbutan-1-one, or a salt or solvate in a concentrated solution or syrup is inhibited by increasing the viscosity of the solution.

In another embodiment, the polymer concentration in a concentrated solution of (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof ranges from about 1 ppm to about 200,000 ppm, more particularly from 1 ppm to about 100,000 ppm, more particularly from about 1 ppm to about 50,000 ppm, even more particularly about 1 to 10,000 ppm and even more particularly from about 1 ppm to about 1,000 ppm. In another embodiment, the polymer concentration is from about 1,000 up to about 200,000 ppm.

The ratio of food grade polymer with respect to (S)-1-(3-(((4-amino-2,2-dioxido-1*H-*benzo[c][1,2,6]thiadiazin-5-yl)oxy)methyl)piperidin-1-yl)-3-methylbutan-1-one, or a salt or solvate thereof, either in a concentrated solution or as powder blend with the salt or as spray dried mixture with the salt ranges from 0.1 to 1 to 20 to 1, more particularly from about 0.5 to 1 to 20 to 1, expressed in weight percent. Particularly ratios range from 0.1:1 to 3:1, more particularly from 0.5:1 to 3:1, even more particularly from about 1:1 to 10:1 even more particularly from 2:1 to about 10:1.

In another embodiment provided herein the sweetener is selected from the group consisting of common saccharide sweeteners, e.g., sucrose, fructose (e.g., D-fructose), glucose (e.g., D-glucose); sweetener compositions comprising natural sugars, such as corn syrup (including high fructose corn syrup) or other syrups or sweetener concentrates derived from natural fruit and vegetable sources. More particularly, the sweetener is high fructose corn syrup.

In one embodiment, the sweetener is provided in an aqueous solution in an amount sufficient to form a syrup. Particularly the sweetener is provided in a syrup in an amount, by weight of the total weight of the syrup of from about 18% to about 72%, particularly from about 40% to about 50%, more particularly at 45%.

The solutions provided herein may include further optional ingredients for example but not limited to mono-, oligo- and polysaccharides such as, but not limited to maltodextrin.

Other optional ingredients in the solutions are contemplated such as flavors and flavor compositions.

The methods provided herein allow for a substantial increase in the solubility of (S)-1-(3-(((4-amino-2,2-dioxido-1*H*-benzo[c][1,2,6]thiadiazin-5-yl)oxy)methyl)piperidin-1-yl)-3-methylbutan-1-one. Further, the methods provided herein allow for a substantial increase in stability of the solutions, e.g., the prevention of precipitation of (S)-1-(3-(((4-amino-2,2-dioxido-1*H*-benzo[c][1,2,6]thiadiazin-5-yl)oxy)methyl)piperidin-1-yl)-3-methylbutan-1-one, particularly at high concentrations.

In a further embodiment provided here, beverage products include, without limitation, carbonated soft drinks, including cola, lemon-lime, root beer, heavy citrus ("dew type"), fruit flavored and cream sodas; powdered soft drinks, as well as liquid concentrates such as fountain syrups and cordials; coffee and coffee-based drinks, coffee substitutes and cereal-based beverages; teas, including dry mix products as well as ready-to-drink teas (herbal and tealeaf based); fruit and vegetable juices and juice flavored beverages as well as juice drinks, nectars, concentrates, punches and "ades"; sweetened and flavored waters, both carbonated and still; sport/energy/health drinks; alcoholic beverages plus alcohol-free and other low-alcohol products including beer and malt beverages, cider, and wines (still, sparkling, fortified wines and wine coolers); other beverages processed with heating (infusions, pasteurization, ultra high temperature, ohmic heating or commercial aseptic sterilization) and hot-filled packaging; and cold-filled products made through filtration or other preservation techniques.

In one embodiment, the concentrated solutions and syrups provided herein are ideally suited to be diluted further for example into a beverage to supply for example (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, at less than 7 ppm to about 0.1 ppm by weight, of the total weight of the beverage, particularly from about 0.2 to about 6 ppm, more particularly from about 0.5 ppm to about 3 ppm and even more particularly from about 0.5 ppm to about 1 ppm, by weight of the total weight of the solution.

"Salt" refers to a salt of a compound, which possesses the desired pharmacological activity of the parent compound. Such salts include: (1) acid addition salts, formed with inorganic acids such as hydrochloric acid, hydrobromic acid, sulfuric acid, nitric acid, phosphoric acid, and the like; or formed with organic acids such as acetic acid, propionic acid, hexanoic acid, cyclopentanepropionic acid, glycolic acid, pyruvic acid, lactic acid, malonic acid, succinic acid, malic acid, maleic acid, fumaric acid, tartaric acid, citric acid, benzoic acid, 3-(4-hydroxybenzoyl)benzoic acid, cinnamic acid, mandelic acid, methanesulfonic acid, ethanesulfonic acid, 1,2-ethane-disulfonic acid, 2-hydroxyethanesulfonic acid, benzenesulfonic acid, 4-chlorobenzenesulfonic acid, 2-naphthalenesulfonic acid, 4-toluenesulfonic acid, camphorsulfonic acid, 4-methylbicyclo[2.2.2]-oct-2-ene-1-carboxylic acid, glucoheptonic acid, 3-phenylpropionic acid, trimethylacetic acid, tertiary butylacetic acid, lauryl sulfuric acid, gluconic acid, glutamic acid, hydroxynaphthoic acid, salicylic acid, stearic acid, muconic acid, and the like; or (2) salts formed when an acidic proton present in the parent compound is replaced by a metal ion, e.g., an alkali metal ion, an alkaline earth ion, or an aluminum ion; or coordinates with an organic base such as ethanolamine, diethanolamine, triethanolamine, N-methylglucamine and the like. Particularly provided herein alkali metal ions are potassium and sodium ions.

"Solvate" means a compound formed by solvation (the combination of solvent molecules with molecules or ions of the solute), or an aggregate that consists of a solute ion or molecule, i.e., a compound of the present invention, with one or more solvent molecules. When water is the solvent, the corresponding solvate is "hydrate".

The solutions provided herein further provide a reduced sugar beverage.

The below examples are illustrative only and are not meant to limit the claims or embodiments described herein.

### EXAMPLES

### Example 1

### 30ppm of (S)-1-(3-(((4-amino-2,2-dioxido-1H-benzo[c][1,2,6]thiadiazin-5-yl)oxy)methyl)piperidin-1-yl)-3-methylbutan-1-one in syrup (34 Brix). Comparative example

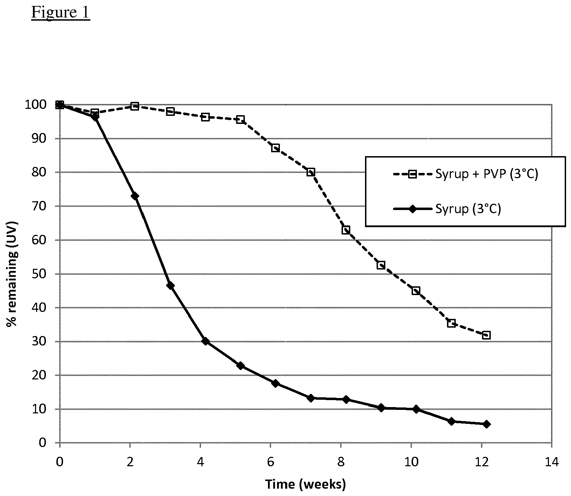

A concentrated solution 1 of (S)-1-(3-(((4-amino-2,2-dioxido-1H-benzo[c][1,2,6]thiadiazin-5-yl)oxy)methyl)piperidin-1-yl)-3-methylbutan-1-one at 0.3% (w/w) (3000ppm) was prepared in water. pH was adjusted to 11 using NaOH to form (S)-1-(3-(((4-amino-2,2-dioxido-1H-benzo[c][1,2,6]thiadiazin-5-yl)oxy)methyl)piperidin-1-yl)-3-methylbutan-1-one sodium salt and obtain an homogeneous solution. Next, a syrup was prepared by mixing an aqueous solution of High Fructose Corn Syrup (HFCS), citric acid and deionized water. The final syrup contained 34% fructose, 0.68% citric acid, 0.1% sodium citrate and 65.22% water, with a pH of 2. An aliquot of solution 1 was diluted 100 times with the syrup to yield a final concentration of 30ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 18 times above the intrinsic solubility of the compound at 3°C. The sample was kept at 3°C and the amount of (S)-1-(3-(((4-amino-2,2-dioxido-1H-benzo[c][l,2,6]thiadiazin-5-yl)oxy)methyl)piperidin-1-yl)-3-methylbutan-1-one was measured by UV spectroscopy as a function of time. The amount of (S)-1-(3-(((4-amino-2,2-dioxido-1H-benzo[c][1,2,6]thiadiazin-5-yl)oxy)methyl)piperidin-1-yl)-3-methylbutan-1-one was reduced to 28 ppm after 1 week and first crystals were visually observed. After 12 weeks 1.7 ppm of (S)-1-(3-(((4-amino-2,2-dioxido-1H-benzo[c][1,2,6]thiadiazin-5-yl)oxy)methyl)piperidin-1-yl)-3-methylbutan-1-one remained in solution. See Figure 1.

### Example 2

### 30ppm of (s)-1-(3-(((4-amino-2,2-dioxido-1H-benzo[c][1,2,6]thiadiazin-5-yl)oxy)methyl)piperidin-1-yl)-3-methylbutan-1-one in syrup (34 Brix) containing polyvinylpyrrolidone PVP

A concentrated solution 1 of (S)-1-(3-(((4-amino-2,2-dioxido-1*H*-benzo[c][1,2,6]thiadiazin-5-yl)oxy)methyl)piperidin-1-yl)-3-methylbutan-1-one at 0.3% (w/w) (3000ppm) was prepared in water. pH was adjusted to 11 using NaOH to form (S)-1-(3-(((4-amino-2,2-dioxido-1H-benzo[c][1,2,6]thiadiazin-5-yl)oxy)methyl)piperidin-1-yl)-3-methylbutan-1-one sodium salt and obtain an homogeneous solution. Next, a syrup was prepared by mixing an aqueous solution of HFCS, citric acid, PVP 55k and deionized water. The final syrup contained 34% fructose, 0.68% citric acid, 0.1% sodium citrate, 0.03% PVP and 65.19% water. An aliquot of solution 1 was diluted 100 times with the syrup to yield a final concentration of 30ppm of (S)-1-(3-(((4-amino-2,2-dioxido-1H-benzo[c][1,2,6]thiadiazin-5-yl)oxy)methyl)piperidin-1-yl)-3-methylbutan-1-one , i.e. about 18 times above the intrinsic solubility of the compound at 3°C. The sample was kept at 3°C and the amount of (S)-1-(3-(((4-amino-2,2-dioxido-1H-benzo[c][1,2,6]thiadiazin-5-yl)oxy)methyl)piperidin-1-yl)-3-methylbutan-1-one was measured by UV spectroscopy as a function of time. The amount of (S)-1-(3-(((4-amino-2,2-dioxido-1H-benzo[c][1,2,6]thiadiazin-5-yl)oxy)methyl)piperidin-1-yl)-3-methylbutan-1-one was maintained at 30ppm for 4 weeks, before a slight decrease and appearance of few crystals. After 12 weeks 9.6ppm of (S)-1-(3-(((4-amino-2,2-dioxido-1H-benzo[c][1,2,6]thiadiazin-5-yl)oxy)methyl)piperidin-1-yl)-3-methylbutan-1-one remained in solution.

### Example 3

### 30ppm of (S)-1-(3-(((4-amino-2,2-dioxido-1H-benzo[c][1,2,6]thiadiazin-5-yl)oxy)methyl)piperidin-1-yl)-3-methylbutan-1-one in syrup (34 Brix) containing PVP and Maltodextrin

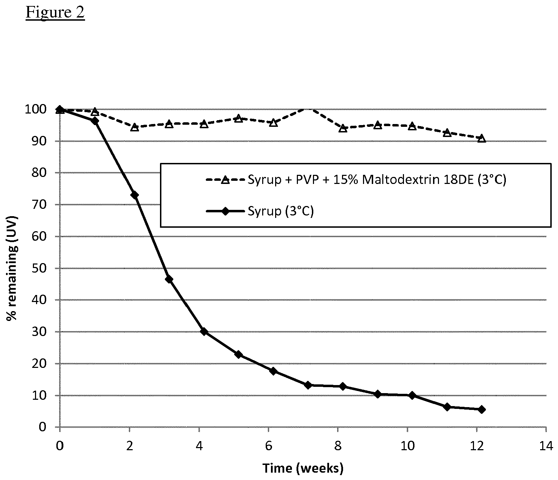

A concentrated solution 1 of (S)-1-(3-(((4-amino-2,2-dioxido-1H-benzo[c][1,2,6]thiadiazin-5-yl)oxy)methyl)piperidin-1-yl)-3-methylbutan-1-one at 0.3% (w/w) (3000ppm) was prepared in water. pH was adjusted to 11 using NaOH to form (S)-1-(3-(((4-amino-2,2-dioxido-1H-benzo[c][1,2,6]thiadiazin-5-yl)oxy)methyl)piperidin-1-yl)-3-methylbutan-1-one sodium salt and obtain an homogeneous solution. Next, a syrup was prepared by mixing an aqueous solution of HFCS, citric acid, PVP 55k, maltodextrin (18DE) and deionized water. The final syrup contained 34% fructose, 15% maltodextrin, 0.68% citric acid, 0.1% sodium citrate, 0.03% PVP and 65.19% water. An aliquot of solution 1 was diluted 100 times with the syrup to yield a final concentration of 30 ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 18 times above the intrinsic solubility of the compound at 3°C. The sample was kept at 3°C and the amount of (S)-1-(3-(((4-amino-2,2-dioxido-1H-benzo[c][1,2,6]thiadiazin-5-yl)oxy)methyl)piperidin-1-yl)-3-methylbutan-1-one was measured by UV spectroscopy as a function of time. The amount of (S)-1-(3-(((4-amino-2,2-dioxido-1H-benzo[c][1,2,6]thiadiazin-5-yl)oxy)methyl)piperidin-1-yl)-3-methylbutan-1-one was maintained at 30ppm for 8 weeks, before a slight decrease and appearance of few crystals. After 12 weeks 27.3 ppm of (S)-1-(3-(((4-amino-2,2-dioxido-1H-benzo[c][1,2,6]thiadiazin-5-yl)oxy)methyl)piperidin-1-yl)-3-methylbutan-1-one remained in solution. See Figure 2.

### Example 4

### 30ppm of (S)-1-(3-(((4-amino-2,2-dioxido-1H-benzo[c][1,2,6]thiadiazin-5-yl)oxy)methyl)piperidin-1-yl)-3-methylbutan-1-one in syrup (34 Brix) containing HPMC

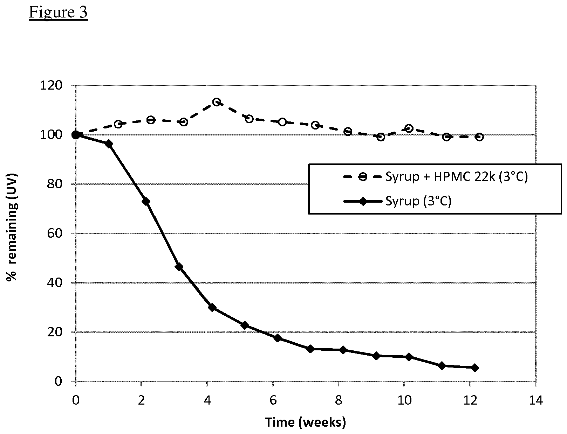

A concentrated solution 1 of (S)-1-(3-(((4-amino-2,2-dioxido-1H-benzo[c][1,2,6]thiadiazin-5-yl)oxy)methyl)piperidin-1-yl)-3-methylbutan-1-one at 0.3% (w/w) (3000ppm) was prepared in water. pH was adjusted to 11 using NaOH to form (S)-1-(3-(((4-amino-2,2-dioxido- 1H-benzo[c][1,2,6]thiadiazin-5-yl)oxy)methyl)piperidin-1-yl)-3-methylbutan-1-one sodium salt and obtain an homogeneous solution. Next, a syrup was prepared by mixing an aqueous solution of HFCS, citric acid, hydroxypropylmethylcellulose (HPMC, 22kDa, Sigma) and deionized water. The final syrup contained 34% fructose, 0.68% citric acid, 0.1% sodium citrate, 0.03% HPMC and 65.19% water. An aliquot of solution 1 was diluted 100 times with the syrup to yield a final concentration of 30 ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 18 times above the intrinsic solubility of the compound at 3°C. The sample was kept at 3°C and the amount of (S)-1-(3-(((4-amino-2,2-dioxido-1H-benzo[c][1,2,6]thiadiazin-5-yl)oxy)methyl)piperidin-1-yl)-3-methylbutan-1-one was measured by UV spectroscopy as a function of time. The amount of (S)-1-(3-(((4-amino-2,2-dioxido-1H-benzo[c][1,2,6]thiadiazin-5-yl)oxy)methyl)piperidin-1-yl)-3-methylbutan-1-one was maintained at 30 ppm for 12 weeks. See Figure 3.

### Example 5

### 100ppm of (S)-1-(3-(((4-amino-2,2-dioxido-1H-benzo[c][1.2,6]thiadiazin-5-yl)oxy)methyl)piperidin-1-yl)-3-methylbutan-1-one in syrup (43 Brix). Comparative example

A concentrated solution 2 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. The pH was adjusted to 11 using NaOH to form the (S)-1-(3-(((4-amino-2,2-dioxido-1H-benzo[c][1,2,6]thiadiazin-5-yl)oxy)methyl)piperidin-1-yl)-3-methylbutan-1-one sodium salt, and a homogeneous solution was obtained. Next, a syrup was prepared by mixing an aqueous solution of HFCS, citric acid and deionized water. The final syrup contained 43% fructose, 1% citric acid, and 56% water. An aliquot of solution 2 was diluted 100 times with the syrup to yield a final concentration of 100ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 15 times above the intrinsic solubility of the compound at 20°C. The sample was stirred at 20°C and crystallization was followed in a Crystalline PV device equipped with CCD cameras. Crystallization started after about 530 minutes.

### Example 6

### 100ppm of (S)-1-(3-(((4-amino-2,2-dioxido-1H-benzo[c][1,2,61thiadiazin-5-yl)oxy)methyl)piperidin-1-yl)-3-methylbutan-1-one in syrup (43 Brix) containing HPC

A concentrated solution 2 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. The pH was adjusted to 11 using NaOH to form the (S)-1-(3-(((4-amino-2,2-dioxido-1H-benzo[c][1,2,6]thiadiazin-5-yl)oxy)methyl)piperidin-1-yl)-3-methylbutan-1-one sodium salt, and a homogeneous solution was obtained. Next, a syrup was prepared by mixing an aqueous solution of HFCS, citric acid, HydroxyPropyl Cellulose (HPC) 100k and deionized water. The final syrup contained 43% fructose, 1% citric acid, 0.05% HPC and 55.95% water. An aliquot of solution 2 was diluted 100 times with the syrup to yield a final concentration of 100ppm of (S)-1-(3-(((4-amino-2,2-dioxido-1H-benzo[c][1,2,6]thiadiazin-5-yl)oxy)methyl)piperidin-1-yl)-3-methylbutan-1-one , i.e. about 15 times above the intrinsic solubility of the compound at 20°C. The sample was stirred at 20°C and crystallization was followed in a Crystalline PV device equipped with CCD cameras. First crystals were observed after about 3520 minutes.

### Example 7

### 100ppm of (S)-1-(3-(((4-amino-2,2-dioxido-1H-benzo[c][1,2,6]thiadiazin-5-yl)oxy)methyl)piperidin-1-yl)-3-methylbutan-1-one in citric acid buffer solution.

### Comparative example

A concentrated solution 2 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. The pH was adjusted to 11 using NaOH to form the (S)-1-(3-(((4-amino-2,2-dioxido-1H-benzo[c][1,2,6]thiadiazin-5-yl)oxy)methyl)piperidin-1-yl)-3-methylbutan-1-one sodium salt, and a homogeneous solution was obtained. Next, a citric acid buffer solution was prepared by mixing 50mM citric acid in deionised water (pH=2.8). An aliquot of solution 2 was diluted 100 times with the buffer solution to yield a final concentration of 100ppm of (S)-1-(3-(((4-amino-2,2-dioxido-1H-benzo[c][1,2,6]thiadiazin-5-yl)oxy)methyl)piperidin-1-yl)-3-methylbutan-1-one , i.e. about 15 times above the intrinsic solubility of the compound at 20°C. The sample was stirred at 20°C and crystallization was followed in a Crystalline PV device equipped with CCD cameras. First crystals were observed after about 166 minutes.

### Example 8

### 100ppm of (S)-1-(3-(((4-amino-2,2-dioxido-1H-benzo[c][1,2,6]thiadiazin-5-yl)oxy)methyl)piperidin-1-yl)-3-methylbutan-1-one in citric acid buffer solution containing CMC

A concentrated solution 2 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. The pH was adjusted to 11 using NaOH to form the (S)-1-(3-(((4-amino-2,2-dioxido-1H-benzo[c][1,2,6]thiadiazin-5-yl)oxy)methyl)piperidin-1-yl)-3-methylbutan-1-one sodium salt, and a homogeneous solution was obtained. Next, a citric acid buffer solution was prepared by mixing 50mM citric acid and carboxymethyl cellulose (CMC) in deionised water (pH=2.8). The final water solution contained 50mM citric acid and 0.05% CMC. An aliquot of solution 2 was diluted 100 times with the buffer solution to yield a final concentration of 100ppm of (S)-1-(3-(((4-amino-2,2-dioxido-1H-benzo[c][1,2,6]thiadiazin-5-yl)oxy)methyl)piperidin-1-yl)-3-methylbutan-1-one , i.e. about 15 times above the intrinsic solubility of the compound at 20°C. The sample was stirred at 20°C and crystallization was followed in a Crystalline PV device equipped with CCD cameras. First crystals were observed after about 466 minutes.

### Example 9

### 100ppm of (S)-1-(3-(((4-amino-2,2-dioxido-1H-benzo[c][1,2,6]thiadiazin-5-yl)oxy)methyl)piperidin-1-yl)-3-methylbutan-1-one in syrup (43 Brix) containing hydroxypropylmethyl cellulose HPMC

A concentrated solution 2 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. The pH was adjusted to 11 using NaOH to form the (S)-1-(3-(((4-amino-2,2-dioxido-1H-benzo[c][1,2,6]thiadiazin-5-yl)oxy)methyl)piperidin-1-yl)-3-methylbutan-1-one sodium salt, and a homogeneous solution was obtained. Next, a syrup was prepared by mixing an aqueous solution of HFCS, citric acid, HPMC 100k and deionized water. The final syrup contained 43% fructose, 1% citric acid, 0.05% HPMC and 55.95% water. An aliquot of solution 2 was diluted 100 times with the syrup to yield a final concentration of 100ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 15 times above the intrinsic solubility of the compound at 20°C. The sample was stirred at 20°C and crystallization was followed in a Crystalline PV device equipped with CCD cameras. No crystallization was observed after seven days.

### Example 10

### 18ppm of (S)-1-(3-(((4-amino-2,2-dioxido-1H-benzo[c][1,2,6]thiadiazin-5-yl)oxy)methyl)piperidin-1-yl)-3-methylbutan-1-one in syrup (45 Brix). Comparative example

A concentrated solution 1 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. pH was adjusted to 11 using NaOH to form (S)-1-(3-(((4-amino-2,2-dioxido-1H-benzo[c][1,2,6]thiadiazin-5-yl)oxy)methyl)piperidin-1-yl)-3-methylbutan-1-one sodium salt and obtain an homogeneous solution. Next, a syrup was prepared by mixing an aqueous solution of High Fructose Corn Syrup (HFCS), citric acid, and deionized water. The final syrup contained 45% fructose, 0.68% citric acid, 0.1% sodium citrate, and 54.22% water, with a pH of 2. An aliquot of solution 1 was diluted 555.5 times with the syrup to yield a final concentration of 18ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 11 times above the intrinsic solubility of the compound at 3°C. The sample was kept at 3°C and the amount of (S)-1-(3-(((4-amino-2,2-dioxido-1H-benzo[c][1,2,6]thiadiazin-5-yl)oxy)methyl)piperidin-1-yl)-3-methylbutan-1-one was measured by UV spectroscopy as a function of time. The amount of (S)-1-(3-(((4-amino-2,2-dioxido-1H-benzo[c][1,2,6]thiadiazin-5-yl)oxy)methyl)piperidin-1-yl)-3-methylbutan-1-one was reduced to 15.8 ppm after 7 weeks and first crystals were visually observed. After 14 weeks 3.6 ppm of (S)-1-(3-(((4-amino-2,2-dioxido-1H-benzo[c][1,2,6]thiadiazin-5-yl)oxy)methyl)piperidin-1-yl)-3-methylbutan-1-one remained in solution.

### Example 11

### 18ppm of (S)-1-(3-(((4-amino-2,2-dioxido-1H-benzo[c][1,2,6]thiadiazin-5-yl)oxy)methyl)piperidin-1-yl)-3-methylbutan-1-one in syrup (45 Brix) containing HPMC

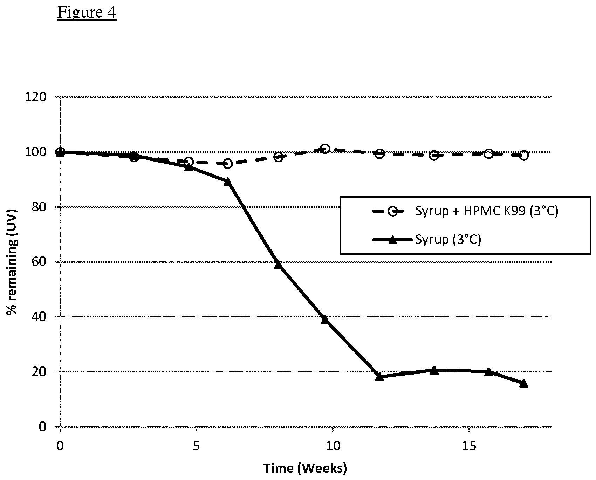

A concentrated solution 1 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. pH was adjusted to 11 using NaOH to form (S)-1-(3-(((4-amino-2,2-dioxido-1H-benzo[c][1,2,6]thiadiazin-5-yl)oxy)methyl)piperidin-1-yl)-3-methylbutan-1-one sodium salt and obtain an homogeneous solution. Next, a syrup was prepared by mixing an aqueous solution of HFCS, citric acid, hydroxypropylmethylcellulose (Methocel K99 Food Grade, Dow Chemical) and deionized water. The final syrup contained 45% fructose, 0.68% citric acid, 0.1% sodium citrate, 0.0009% HPMC and 54.2191% water, with a pH of 2. An aliquot of solution 1 was diluted 555.5 times with the syrup to yield a final concentration of 18ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 11 times above the intrinsic solubility of the compound at 3°C. The sample was kept at 3°C and the amount of (S)-1-(3-(((4-amino-2,2-dioxido-1H-benzo[c][1,2,6]thiadiazin-5-yl)oxy)methyl)piperidin-1-yl)-3-methylbutan-1-one was measured by UV spectroscopy as a function of time. The amount of (S)-1-(3-(((4-amino-2,2-dioxido- 1H-benzo[c][1,2,6]thiadiazin-5-yl)oxy)methyl)piperidin-1-yl)-3-methylbutan-1-one was maintained at 18 ppm for 17 weeks. See Figure 4.

### Example 12

### 18ppm of (S)-1-(3-(((4-amino-2,2-dioxido-1H-benzo[c][1,2,6]thiadiazin-5-yl)oxy)methyl)piperidin-1-yl)-3-methylbutan-1-one in syrup (45 Brix) containing CMC

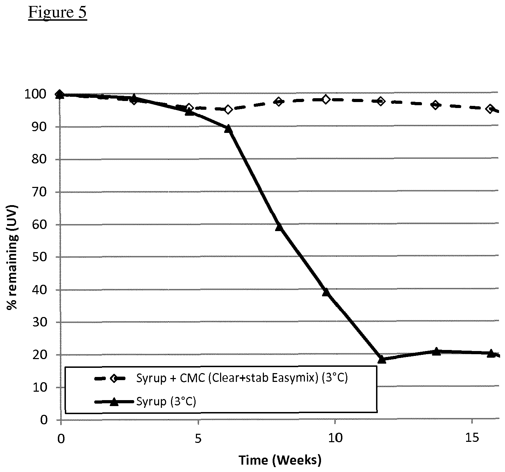

A concentrated solution 1 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. pH was adjusted to 11 using NaOH to form (S)-1-(3-(((4-amino-2,2-dioxido-1H-benzo[c][1,2,6]thiadiazin-5-yl)oxy)methyl)piperidin-1-yl)-3-methylbutan-1-one sodium salt and obtain an homogeneous solution. Next, a syrup was prepared by mixing an aqueous solution of HFCS, citric acid, carboxymethylcellulose (CMC, Clear+Stable 30 Easymix Food Grade, Dow Chemical) and deionized water. The final syrup contained 45% fructose, 0.68% citric acid, 0.1% sodium citrate, 0.0009% CMC and 54.2191% water, with a pH of 2. An aliquot of solution 1 was diluted 555.5 times with the syrup to yield a final concentration of 18ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 11 times above the intrinsic solubility of the compound at 3°C. The sample was kept at 3°C and the amount of (S)-1-(3-(((4-amino-2,2-dioxido-1H-benzo[c][1,2,6]thiadiazin-5-yl)oxy)methyl)piperidin-1-yl)-3-methylbutan-1-one was measured by UV spectroscopy as a function of time. The amount of (S)-1-(3-(((4-amino-2,2-dioxido-1H-benzo[c][1,2,6]thiadiazin-5-yl)oxy)methyl)piperidin-1-yl)-3-methylbutan-1-one was maintained at 18 ppm for 16 weeks. See Figure 5.

### Example 13

### 18ppm of (S)-1-(3-(((4-amino-2,2-dioxido-1H-benzo[c][1,2,6]thiadiazin-5-yl)oxy)methyl)piperidin-1-yl)-3-methylbutan-1-one in syrup (20 Brix). Comparative example

A concentrated solution 1 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. pH was adjusted to 11 using NaOH to form (S)-1-(3-(((4-amino-2,2-dioxido-1H-benzo[c][1,2,6]thiadiazin-5-yl)oxy)methyl)piperidin-1-yl)-3-methylbutan-1-one sodium salt and obtain an homogeneous solution. Next, a syrup was prepared by mixing an aqueous solution of High Fructose Corn Syrup (HFCS), citric acid, and deionized water. The final syrup contained 20% fructose, 0.68% citric acid, 0.1% sodium citrate, and 79.22% water, with a pH of 2. An aliquot of solution 1 was diluted 555.5 times with the syrup to yield a final concentration of 18ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 11 times above the intrinsic solubility of the compound at 3°C. The sample was kept at 3°C and the amount of (S)-1-(3-(((4-amino-2,2-dioxido-1H-benzo[c][1,2,6]thiadiazin-5-yl)oxy)methyl)piperidin-1-yl)-3-methylbutan-1-one was measured by UV spectroscopy as a function of time. The amount of (S)-1-(3-(((4-amino-2,2-dioxido-1H-benzo[c][1,2,6]thiadiazin-5-yl)oxy)methyl)piperidin-1-yl)-3-methylbutan-1-one was reduced to 14 ppm after 3.5 weeks and crystals were visually observed. After 18 weeks 4 ppm of (S)-1-(3-(((4-amino-2,2-dioxido-1H-benzo[c][1,2,6]thiadiazin-5-yl)oxy)methyl)piperidin-1-yl)-3-methylbutan-1-one remained in solution.

### Example 14

### 18ppm of (S)-1-(3-(((4-amino-2,2-dioxido-1H-benzo[c][1,2,6]thiadiazin-5-yl)oxy)methyl)piperidin-1-yl)-3-methylbutan-1-one in syrup (20 Brix) containing HPMC

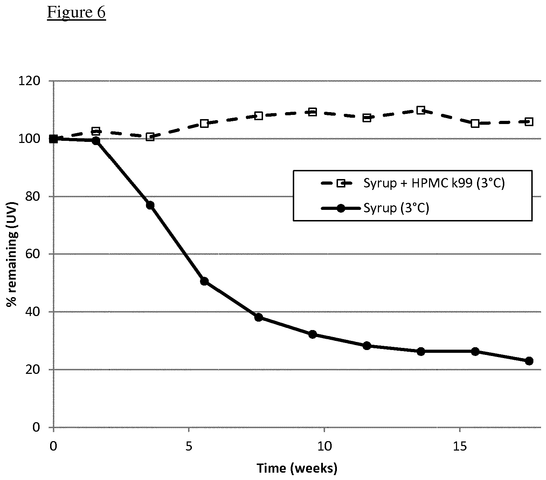

A concentrated solution 1 of (S)-1-(3-(((4-amino-2,2-dioxido-1H-benzo[c][1,2,6]thiadiazin-5-yl)oxy)methyl)piperidin-1-yl)-3-methylbutan-1-one at 1% (w/w) (10000ppm) was prepared in water. pH was adjusted to 11 using NaOH to form (S)-1-(3-(((4-amino-2,2-dioxido-1H-benzo[c][1,2,6]thiadiazin-5-yl)oxy)methyl)piperidin-1-yl)-3-methylbutan-1-one sodium salt and obtain an homogeneous solution. Next, a syrup was prepared by mixing an aqueous solution of HFCS, citric acid, hydroxypropylmethylcellulose (Methocel K99 Food Grade, Dow Chemical) and deionized water. The final syrup contained 20% fructose, 0.68% citric acid, 0.1% sodium citrate, 0.0009% HPMC and 79.2191% water, with a pH of 2. An aliquot of solution 1 was diluted 555.5 times with the syrup to yield a final concentration of 18ppm of (S)-1-(3-(((4-amino-2,2-dioxido-1H-benzo[c][1,2,6]thiadiazin-5-yl)oxy)methyl)piperidin-1-yl)-3-methylbutan-1-one, i.e. about 11 times above the intrinsic solubility of the compound at 3°C. The sample was kept at 3°C and the amount of (S)-1-(3-(((4-amino-2,2-dioxido-1H-benzo[c][1,2,6]thiadiazin-5-yl)oxy)methyl)piperidin-1-yl)-3-methylbutan-1-one was measured by UV spectroscopy as a function of time. The amount of (S)-1-(3-(((4-amino-2,2-dioxido-1H-benzo[c][1,2,6]thiadiazin-5-yl)oxy)methyl)piperidin-1-yl)-3-methylbutan-1-one was maintained at 18 ppm for 18 weeks. See Figure 6.

## Claims

1. A method of making a concentrated solution of (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, comprising adding to an aqueous solution:
a) a food grade polymer that is soluble in water at or above 0.1% by weight at 20 °C to the aqueous solution;
b) a sweetener; and
c) (S)-1-(3-(((4-amino-2,2-dioxido-1*H*-benzo[c][1,2,6]thiadiazin-5-yl)oxy)methyl)piperidin-1-yl)-3-methylbutan-1-one wherein the concentration of (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, is greater than or equal to 1 ppm, by weight of the total weight of the solution, at 3 °C when the pH is less than or equal to 4 or it is greater than or equal to 7 ppm, by weight of the total weight of the solution, at 25 °C when the pH is less than or equal to 4.

2. A method of making a concentrated solution of (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof comprising:
a) adding a sweetener and acid to water to form a syrup;
b) adding a (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof to the syrup to form a supersaturated solution of (S)-1-(3-(((4-amino-2,2-dioxido-1*H-*benzo[c][1,2,6]thiadiazin-5-yl)oxy)methyl)piperidin-1-yl)-3-methylbutan-1-one, or a salt or solvate thereof; and
c) adding a food grade polymer that is soluble in water at or above 0.1% by weight at 20 °C to any of the steps of a) or b)
to form a concentrated solution comprising the food grade polymer wherein the food grade polymer is soluble at or above 0.1% by weight and the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, in the solution comprising the food polymer is greater than 1 ppm, by weight of the total weight of the solution after 12 weeks at 3 °C at a pH of less than or equal to 4 or greater than 7 ppm at 12 weeks at 20 °C at a pH of less than or equal to 4.

3. The method as recited in claim 1 or 2 wherein the food grade polymer is selected from the group consisting of polyvinylpyrrolidone, hydroxypropylmethyl cellulose, hydroxypropylcellulose, carboxymethylcellulose, cellulose derivatives, gums, alginates, pectins, agar, Carrageenan, starch and starch derivatives.

4. The method as recited in claim 3 wherein the polymer is hydroxypropylmethyl cellulose.

5. The method as recited in any one of claims 1 to 4 wherein the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, in the concentrated solution comprising the food polymer is from about 1 ppm to about 100 ppm by weight, of the total weight of the solution, at 12 weeks at a pH of less than or equal to 4 at a temperature of 3°C.

6. The method as recited in any one of claims 1 to 5 wherein the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, in the concentrated solution comprising the food polymer is from about 1 ppm to about 45ppm by weight, of the total weight of the solution, at 12 weeks at a pH of less than or equal to 4 at a temperature of 3°C or 20°C.

7. The method as recited in any one of claims 1 to 4 wherein the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, in the concentrated solution comprising the food polymer is from about 15 ppm to about 30 ppm of the total weight of the solution, at 12 weeks at a pH of less than or equal to 4 at a temperature of 3°C or 20°C.

8. An aqueous solution comprising:
a) (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof;
b) a food grade polymer that is soluble in water at or above 0.1% by weight at 20 °C; and
c) a sweetener; wherein the concentration of (S)-1-(3-(((4-amino-2,2-dioxido-1*H-*benzo[c][1,2,6]thiadiazin-5-yl)oxy)methyl)piperidin-1-yl)-3-methylbutan-1-one in the solution is greater than or equal to 1 ppm, by weight of the total weight of the solution, at 3 °C when the pH is less than or equal to 4 or it is greater than or equal to 7 ppm, by weight of the total weight of the solution, at 25 °C and the pH is less than or equal to 4.

9. The solution as recited in claim 8 wherein the food grade polymer is selected from the group consisting of hydroxypropylmethyl cellulose, hydroxypropylcellulose, carboxymethylcellulose, cellulose derivatives, gums, alginates, pectins, agar, Carrageenan, starch and starch derivatives.

10. The solution as recited in claim 9 wherein the polymer is hydroxypropylmethyl cellulose.

11. The solution as recited in any one of claims 8 to 10 wherein the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, in the concentrated solution comprising the food polymer is from about 1 ppm to about 100 ppm by weight, of the total weight of the solution, at 12 weeks at a pH of less than or equal to 4 at a temperature of 3°C.

12. The method as recited in any one of claims 8 to 10 wherein the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, in the concentrated solution comprising the food polymer is from about 1 ppm to about 45 ppm by weight, of the total weight of the solution, at 12 weeks at a pH of less than or equal to 4 at a temperature of 3°C or 20°C.

13. The method as recited in any one of claims 8 to 10 wherein the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof, in the concentrated solution comprising the food polymer is from 15 ppm to about 30 ppm of the total weight of the solution, at 12 weeks at a pH of less than or equal to 4 at a temperature of 3°C or 20°C.

14. A method of making a beverage comprising diluting the concentrated solutions of any one of claims 1 to 7 into an aqueous solution wherein the concentration of the (S)-1-(3-(((4-amino-2,2-dioxido-1*H*-benzo[c][1,2,6]thiadiazin-5-yl)oxy)methyl)piperidin-1-yl)-3-methylbutan-1-one, by weight, of the total weight of the beverage is less than about 0.2 to about 6 ppm.

15. The method as recited in claim 14 wherein the beverage is a carbonated beverage.

16. A beverage comprising:
a) (S)-1-(3-(((4-amino-2,2-dioxido-1*H*-benzo[c][1,2,6]thiadiazin-5-yl)oxy)methyl)piperidin-1-yl)-3-methylbutan-1-one, or a salt or solvate thereof;
b) a food grade polymer that is soluble in water at or above 0.1% by weight at 20 °C; and
c) a sweetener; wherein the concentration of (S)-1-(3-(((4-amino-2,2-dioxido-1*H-*benzo[c][1,2,6]thiadiazin-5-yl)oxy)methyl)piperidin-1-yl)-3-methylbutan-1-onein the beverage is from about 0.2 ppm to about 6 ppm by weight of the total weight of the solution.

17. The beverage as recited in claim 16 wherein the concentration of (S)-1-(3-(((4-amino-2,2-dioxido-1*H*-benzo[c][1,2,6]thiadiazin-5-yl)oxy)methyl)piperidin-1-yl)-3-methylbutan-1-one in the beverage is from about 0.5 ppm to about 3 ppm by weight of the total weight of the solution.

18. The beverage as recited in claim 16 wherein the concentration of (S)-1-(3-(((4-amino-2,2-dioxido-1*H*-benzo[c][1,2,6]thiadiazin-5-yl)oxy)methyl)piperidin-1-yl)-3-methylbutan-1-one in the beverage is from about 0.5 ppm to about 1 ppm by weight of the total weight of the solution.

19. The beverage as recited in claim 17 or 18 wherein the food grade polymer is selected from the group consisting of hydroxypropylmethyl cellulose, hydroxypropylcellulose, carboxymethylcellulose, cellulose derivatives, gums, alginates, pectins, agar, Carrageenan, starch and starch derivatives.

20. The beverage as recited in claim 19 wherein the polymer is hydroxypropylmethyl cellulose.

21. The beverage as recited in claim 19 wherein the polymer is carboxymethylcelulose.

## Patentansprüche

1. Verfahren zur Herstellung einer konzentrierten Lösung von (S)-1-(3-(((4-Amino-2,2-dioxido-1H-benzo[c][1,2,6]thiadiazin-5-yl)oxy)methyl)piperidin-1-yl)-3-methylbutan-l-on oder eines Salzes oder Solvats davon, umfassend die Zugabe zu einer wässrigen Lösung:
a) eines Polymers in Lebensmittelqualität, das in Wasser bei oder oberhalb von 0,1 Gew.-% löslich ist, bei 20 °C zu der wässrigen Lösung;
b) eines Süßstoffs; und
c) (S)-1-(3-(((4-Amino-2,2-dioxido-1H-benzo[c][1,2,6]thiadiazin-5-yl)oxy)methyl)piperidin-1-yl)-3-methylbutan-1-on, wobei die Konzentration von (S)-1-(3-(((4-Amino-2,2-dioxido-1H-benzo[c][1,2,6]thiadiazin-5-yl)oxy)methyl)piperidin-1-yl)-3-methylbutan-l-on oder eines Salzes oder Solvats davon, größer ist oder gleich 1 Gew.-ppm des Gesamtgewichts der Lösung bei 3 °C, wenn der pH-Wert kleiner als oder gleich 4 ist, oder sie ist größer als oder gleich 7 Gew.-ppm des Gesamtgewichts der Lösung bei 25 °C, wenn der pH-Wert kleiner als oder gleich 4 ist.

2. Verfahren zur Herstellung einer konzentrierten Lösung von (S)-1-(3-(((4-Amino-2,2-dioxido-1H-benzo[c][1,2,6]thiadiazin-5-yl)oxy)methyl)piperidin-1-yl)-3-methylbutan-1-on oder eines Salzes oder Solvats davon, umfassend:
a) Zugabe eines Süßungsmittels und einer Säure zu Wasser, um einen Sirup zu bilden;
b) Zugabe von (S)-1-(3-(((4-Amino-2,2-dioxido-1H-benzo[c][1,2,6]thiadiazin-5-yl)oxy)methyl)piperidin-1-yl)-3-methylbutan-1-on oder einem Salz oder Solvat davon zu dem Sirup zur Bildung einer übersättigten Lösung von (S)-1-(3-(((4-Amino-2,2-dioxido-1H-benzo[c][1,2,6]thiadiazin-5-yl)oxy)methyl)piperidin-1-yl)-3-methylbutan-1-on oder einem Salz oder Solvat davon; und
c) Zugeben eines Polymers mit Lebensmittelqualität, das in Wasser bei oder über 0,1 Gew.-% bei 20 °C löslich ist, zu irgendeinem der Schritte von a) oder b),
um eine konzentrierte Lösung zu bilden, die das Polymer in Lebensmittelqualität umfasst, wobei das Polymer in Lebensmittelqualität bei oder über 0,1 Gew.-% löslich ist und die Konzentration des (S)-1-(3-(((4-Amino-2,2-dioxido-1H-benzo[c][1,2,6]thiadiazin-5-yl)oxy)methyl)piperidin-1-yl)-3-methylbutan-1-on oder eines Salzes oder Solvats davon in der das Lebensmittelpolymer umfassenden Lösung größer ist als 1 Gew.-ppm des Gesamtgewichts der Lösung nach 12 Wochen bei 3 °C bei einem pH-Wert kleiner als oder gleich 4, oder größer ist als 7 ppm nach 12 Wochen bei 20 °C bei einem pH-Wert von kleiner als oder gleich 4.

3. Verfahren nach Anspruch 1 oder 2, wobei das Polymer in Lebensmittelqualität ausgewählt ist aus der Gruppe bestehend aus Polyvinylpyrrolidon, Hydroxypropylmethylcellulose, Hydroxypropylcellulose, Carboxymethylcellulose, Cellulosederivaten, Gummis, Alginaten, Pektinen, Agar, Carrageenan, Stärke und Stärkederivaten.

4. Verfahren nach Anspruch 3, wobei das Polymer Hydroxypropylmethylcellulose ist.

5. Verfahren nach einem der Ansprüche 1 bis 4, wobei die Konzentration von (S)-1-(3-(((4-Amino-2,2-dioxido-1H-benzo[c][1,2,6]thiadiazin-5-yl)oxy)methyl)piperidin-1-yl)-3-methylbutan-1-on oder einem Salz oder Solvat davon in der konzentrierten, das Polymer in Lebensmittelqualität umfassenden Lösung von etwa 1 Gew.-%-ppm bis etwa 100 Gew.-ppm des Gesamtgewichts der Lösung nach 12 Wochen bei einem pH von weniger als oder gleich 4 bei einer Temperatur von 3 °C beträgt.

6. Verfahren nach einem der Ansprüche 1 bis 5, wobei die Konzentration von (S)-1-(3-(((4-Amino-2,2-dioxido-1H-benzo[c][1,2,6]thiadiazin-5-yl)oxy)methyl)piperidin-1-yl)-3-methylbutan-1-on oder eines Salzes oder Solvats davon in der konzentrierten, das Polymer in Lebensmittelqualität umfassenden Lösung von etwa 1 ppm bis etwa 45 Gew.-ppm des Gesamtgewichts der Lösung nach 12 Wochen bei einem pH von weniger als oder gleich 4 bei einer Temperatur von 3 °C oder 20 °C beträgt.

7. Verfahren nach einem der Ansprüche 1 bis 4, wobei die Konzentration des (S)-1-(3-(((4-Amino-2,2-dioxido-1H-benzo[c][1,2,6]thiadiazin-5-yl)oxy)methyl)piperidin-1-yl)-3-methylbutan-1-on oder eines Salzes oder Solvats davon in der konzentrierten, das Polymer in Lebensmittelqualität umfassenden Lösung von etwa 15 ppm bis etwa 30 ppm des Gesamtgewichts der Lösung nach 12 Wochen bei einem pH von weniger als oder gleich 4 bei einer Temperatur von 3 °C oder 20 °C beträgt.

8. Wässrige Lösung, umfassend:
a) (S)-1-(3-(((4-Amino-2,2-dioxido-1H-benzo[c][1,2,6]thiadiazin-5-yl)oxy)methyl)piperidin-1-yl)-3-methylbutan-1-on oder ein Salz oder Solvat davon;
b) ein Polymer in Lebensmittelqualität, das in Wasser bei oder über 0,1 Gew.-% bei 20 °C löslich ist; und
c) ein Süßungsmittel; wobei die Konzentration von (S)-1-(3-(((4-Amino-2,2-dioxido-1H-benzo[c][1,2,6]thiadiazin-5-yl)oxy)methyl)piperidin-1-yl)-3-methylbutan-1-on in der Lösung größer als oder gleich 1 Gew.-ppm des Gesamtgewichts der Lösung bei 3 °C, wenn der pH-Wert kleiner als oder gleich 4 ist, oder größer als oder gleich 7 Gew.-ppm des Gesamtgewichts der Lösung bei 25 °C ist und der pH kleiner als oder gleich 4 ist.

9. Lösung nach Anspruch 8, wobei das Polymer in Lebensmittelqualität ausgewählt ist aus der Gruppe bestehend aus Hydroxypropylmethylcellulose, Hydroxypropylcellulose, Carboxymethylcellulose, Cellulosederivaten, Gummis, Alginaten, Pektinen, Agar, Carrageenan, Stärke und Stärkederivaten.

10. Lösung nach Anspruch 9, wobei das Polymer Hydroxypropylmethylcellulose ist.

11. Lösung nach einem der Ansprüche 8 bis 10, wobei die Konzentration des (S)-1-(3-(((4-Amino-2,2-dioxido-1H-benzo[c][1,2,6]thiadiazin-5-yl)oxy)methyl)piperidin-1-yl)-3-methylbutan-1-on oder eines Salzes oder Solvats davon in der konzentrierten, das Lebensmittelpolymer umfassenden Lösung von etwa 1 ppm bis etwa 100 Gew.-ppm des Gesamtgewichts der Lösung nach 12 Wochen bei einem pH von weniger als oder gleich 4 bei einer Temperatur von 3 °C beträgt.

12. Verfahren nach einem der Ansprüche 8 bis 10, wobei die Konzentration des (S)-1-(3-(((4-Amino-2,2-dioxido-1H-benzo[c][1,2,6]thiadiazin-5-yl)oxy)methyl)piperidin-1-yl)-3-methylbutan-1-on oder eines Salzes oder Solvats davon in der konzentrierten, das Lebensmittelpolymer umfassenden Lösung von etwa 1 ppm bis etwa 45 Gew.-ppm des Gesamtgewichts der Lösung nach 12 Wochen bei einem pH von weniger als oder gleich 4 bei einer Temperatur von 3 °C oder 20 °C beträgt.

13. Verfahren nach einem der Ansprüche 8 bis 10, wobei die Konzentration des (S)-1-(3-(((4-Amino-2,2-dioxido-1H-benzo[c][1,2,6]thiadiazin-5-yl)oxy)methyl)piperidin-1-yl)-3-methylbutan-1-on oder eines Salzes oder Solvats davon in der konzentrierten, das Lebensmittelpolymer umfassenden Lösung von 15 ppm bis etwa 30 ppm des Gesamtgewichts der Lösung nach 12 Wochen bei einem pH von weniger als oder gleich 4 bei einer Temperatur von 3 °C oder 20 °C beträgt.

14. Verfahren zur Herstellung eines Getränks, umfassend das Verdünnen der konzentrierten Lösungen nach einem der Ansprüche 1 bis 7 in eine wässrige Lösung, wobei die Konzentration des (S)-1-(3-(((4-Amino-2,2-dioxido-1H-benzo[c][1,2,6]thiadiazin-5-yl)oxy)methyl)piperidin-1-yl)-3-methylbutan-1-on bezogen auf das Gesamtgewicht des Getränks, weniger als etwa 0,2 bis etwa Gew.-6 ppm beträgt.

15. Verfahren nach Anspruch 14, wobei das Getränk ein mit Kohlensäure versetztes Getränk ist.

16. Getränk, umfassend:
a) (S)-1-(3-(((4-Amino-2,2-dioxido-1H-benzo[c][1,2,6]thiadiazin-5-yl)oxy)methyl)piperidin-1-yl)-3-methylbutan-1-on oder ein Salz oder Solvat davon;
b) ein Polymer in Lebensmittelqualität, das in Wasser bei oder über 0,1 Gew.-% bei 20 °C löslich ist; und
c) ein Süßungsmittel; wobei die Konzentration von (S)-1-(3-(((4-Amino-2,2-dioxido-1H-benzo[c][1,2,6]thiadiazin-5-yl)oxy)methyl)piperidin-1-yl)-3-methylbutan-1-on in dem Getränk von etwa 0,2 ppm bis etwa 6 Gew.-ppm des Gesamtgewichts der Lösung beträgt.

17. Getränk nach Anspruch 16, wobei die Konzentration von (S)-1-(3-(((4-Amino-2,2-dioxido-1H-benzo[c][1,2,6]thiadiazin-5-yl)oxy)methyl)piperidin-1-yl)-3-methylbutan-l-on in dem Getränk etwa 0,5 ppm bis etwa 3 Gew.-ppm des Gesamtgewichts der Lösung beträgt.

18. Getränk nach Anspruch 16, wobei die Konzentration von (S)-1-(3-(((4-Amino-2,2-dioxido-1H-benzo[c][1,2,6]thiadiazin-5-yl)oxy)methyl)piperidin-1-yl)-3-methylbutan-l-on in dem Getränk etwa 0,5 ppm bis etwa 1 Gew.-ppm des Gesamtgewichts der Lösung beträgt.

19. Getränk nach Anspruch 17 oder 18, wobei das Polymer in Lebensmittelqualität ausgewählt ist aus der Gruppe bestehend aus Hydroxypropylmethylcellulose, Hydroxypropylcellulose, Carboxymethylcellulose, Cellulosederivaten, Gummis, Alginaten, Pektinen, Agar, Carrageenan, Stärke und Stärkederivaten.

20. Getränk nach Anspruch 19, wobei das Polymer Hydroxypropylmethylcellulose ist.

21. Getränk nach Anspruch 19, wobei das Polymer Carboxymethylcellulose ist.

## Revendications

1. Procédé de préparation d'une solution concentrée de (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou d'un sel ou solvate de celle-ci, comprenant l'étape consistant à ajouter à une solution aqueuse:
a) un polymère de qualité alimentaire qui est soluble dans l'eau à ou au-dessus de 0,1% en poids à 20 °C à la solution aqueuse;
b) un édulcorant; et
c) de la (S)-1-(3-(((4-amino-2,2-dioxydo-1*H*-benzo[c][1,2,6]thiadiazin-5-yl)oxy)méthyl)pipéridin-1-yl)-3-méthylbutan-1-one où la concentration de (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou d'un sel ou solvate de celle-ci, est supérieure ou égale à 1 ppm, en poids par rapport au poids total de la solution, à 3 °C quand le pH est inférieur ou égal à 4 ou elle est supérieure ou égale à 7 ppm, en poids par rapport au poids total de la solution, à 25 °C quand le pH est inférieur ou égal à 4.

2. Procédé de préparation d'une solution concentrée de (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou d'un sel ou solvate de celle-ci, comprenant les étapes consistant à:
a) ajouter un édulcorant et un acide à de l'eau pour former un sirop;
b) ajouter une (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou un sel ou solvate de celle-ci au sirop pour former une solution sursaturée de (S)-1-(3-(((4-amino-2,2-dioxydo-1*H-*benzo[c][1,2,6]thiadiazin-5-yl)oxy)méthyl)pipéridin-1-yl)-3-méthylbutan-1-one, ou d'un sel ou solvate de celle-ci; et
c) ajouter un polymère de qualité alimentaire qui est soluble dans l'eau à ou au-dessus de 0,1% en poids à 20 °C à n'importe laquelle des étapes de a) ou b)
pour former une solution concentrée comprenant le polymère de qualité alimentaire où le polymère de qualité alimentaire est soluble à ou au-dessus de 0,1% en poids et la concentration de la (S)-1-(3-(((4-amino-2,2-dioxydo-1*H-*benzo[c][1,2,6]thiadiazin-5-yl)oxy)méthyl)pipéridin-1-yl)-3-méthylbutan-1-one, ou d'un sel ou solvate de celle-ci, dans la solution comprenant le polymère alimentaire est supérieure à 1 ppm, en poids par rapport au poids total de la solution après 12 semaines à 3 °C à un pH inférieur ou égal à 4 ou supérieure à 7 ppm à 12 semaines à 20 °C à un pH inférieur ou égal à 4.

3. Procédé selon la revendication 1 ou 2, dans lequel le polymère de qualité alimentaire est sélectionné dans le groupe constitué par la polyvinylpyrrolidone, l'hydroxypropylméthylcellulose, l'hydroxypropylcellulose, la carboxyméthylcellulose, les dérivés de cellulose, les gommes, les alginates, les pectines, l'agar-agar, le carraghénane, l'amidon et les dérivés d'amidon.

4. Procédé selon la revendication 3, dans lequel le polymère est de l'hydroxypropylméthylcellulose.

5. Procédé selon l'une quelconque des revendications 1 à 4, dans lequel la concentration de la (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou d'un sel ou solvate de celle-ci, dans la solution concentrée comprenant le polymère alimentaire est d'environ 1 ppm à environ 100 ppm en poids, par rapport au poids total de la solution, à 12 semaines à un pH inférieur ou égal à 4 à une température de 3 °C.

6. Procédé selon l'une quelconque des revendications 1 à 5, dans lequel la concentration de la (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou d'un sel ou solvate de celle-ci, dans la solution concentrée comprenant le polymère alimentaire est d'environ 1 ppm à environ 45 ppm en poids, par rapport au poids total de la solution, à 12 semaines à un pH inférieur ou égal à 4 à une température de 3 °C ou 20 °C.

7. Procédé selon l'une quelconque des revendications 1 à 4, dans lequel la concentration de la (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou d'un sel ou solvate de celle-ci, dans la solution concentrée comprenant le polymère alimentaire est d'environ 15 ppm à environ 30 ppm par rapport au poids total de la solution, à 12 semaines à un pH inférieur ou égal à 4 à une température de 3 °C ou 20 °C.

8. Solution aqueuse comprenant:
a) de la (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou un sel ou solvate de celle-ci;
b) un polymère de qualité alimentaire qui est soluble dans l'eau à ou au-dessus de 0,1% en poids à 20 °C; et
c) un édulcorant; où la concentration de (S)-1-(3-(((4-amino-2,2-dioxydo-1*H-*benzo[c][1,2,6]thiadiazin-5-yl)oxy)méthyl)pipéridin-1-yl)-3-méthylbutan-1-one dans la solution est supérieure ou égale à 1 ppm, en poids par rapport au poids total de la solution, à 3 °C quand le pH est inférieur ou égal à 4 ou elle est supérieure ou égale à 7 ppm, en poids par rapport au poids total de la solution, à 25 °C quand le pH est inférieur ou égal à 4.

9. Solution selon la revendication 8 dans laquelle le polymère de qualité alimentaire est sélectionné dans le groupe constitué par l'hydroxypropylméthylcellulose, l'hydroxypropylcellulose, la carboxyméthylcellulose, les dérivés de cellulose, les gommes, les alginates, les pectines, l'agar-agar, le carraghénane, l'amidon et les dérivés d'amidon.

10. Solution selon la revendication 9, dans laquelle le polymère est de l'hydroxypropylméthylcellulose.

11. Solution selon l'une quelconque des revendications 8 à 10, où la concentration de la (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou d'un sel ou solvate de celle-ci, dans la solution concentrée comprenant le polymère alimentaire est d'environ 1 ppm à environ 100 ppm en poids, par rapport au poids total de la solution, à 12 semaines à un pH inférieur ou égal à 4 à une température de 3 °C.

12. Procédé selon l'une quelconque des revendications 8 à 10, où la concentration de la (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou d'un sel ou solvate de celle-ci, dans la solution concentrée comprenant le polymère alimentaire est d'environ 1 ppm à environ 45 ppm en poids, par rapport au poids total de la solution, à 12 semaines à un pH inférieur ou égal à 4 à une température de 3 °C ou 20 °C.

13. Procédé selon l'une quelconque des revendications 8 à 10, où la concentration de la (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou d'un sel ou solvate de celle-ci, dans la solution concentrée comprenant le polymère alimentaire est de 15 ppm à environ 30 ppm par rapport au poids total de la solution, à 12 semaines à un pH inférieur ou égal à 4 à une température de 3 °C ou 20 °C.

14. Procédé de préparation d'une boisson comprenant la dilution des solutions concentrées selon l'une quelconque des revendications 1 à 7 dans une solution aqueuse dans laquelle la concentration de la (S)-1-(3-(((4-amino-2,2-dioxydo-1*H-*benzo[c][1,2,6]thiadiazin-5-yl)oxy)méthyl)pipéridin-1-yl)-3-méthylbutan-1-one, en poids par rapport au poids total de la boisson, vaut moins d'environ 0,2 à environ 6 ppm.

15. Procédé selon la revendication 14 dans lequel la boisson est une boisson gazeuse.

16. Boisson comprenant:
a) de la (S)-1-(3-(((4-amino-2,2-dioxydo-1*H*-benzo[c][1,2,6]thiadiazin-5-yl)oxy)méthyl)pipéridin-1-yl)-3-méthylbutan-1-one, ou un sel ou solvate de celle-ci;
b) un polymère de qualité alimentaire qui est soluble dans l'eau à ou au-dessus de 0,1% en poids à 20 °C; et
c) un édulcorant; où la concentration de (S)-1-(3-(((4-amino-2,2-dioxydo-1*H-*benzo[c][1,2,6]thiadiazin-5-yl)oxy)méthyl)pipéridin-1-yl)-3-méthylbutan-1-one dans la boisson est d'environ 0,2 ppm à environ 6 ppm en poids par rapport au poids total de la solution.

17. Boisson selon la revendication 16, dans laquelle la concentration de (S)-1-(3-(((4-amino-2,2-dioxydo-1*H*-benzo[c][1,2,6]thiadiazin-5-yl)oxy)méthyl)pipéridin-1-yl)-3-méthylbutan-1-one dans la boisson est d'environ 0,5 ppm à environ 3 ppm en poids par rapport au poids total de la solution.

18. Boisson selon la revendication 16, dans laquelle la concentration de (S)-1-(3-(((4-amino-2,2-dioxydo-1*H*-benzo[c][1,2,6]thiadiazin-5-yl)oxy)méthyl)pipéridin-1-yl)-3-méthylbutan-1-one dans la boisson est d'environ 0,5 ppm à environ 1 ppm en poids par rapport au poids total de la solution.

19. Boisson selon la revendication 17 ou 18, dans laquelle le polymère de qualité alimentaire est sélectionné dans le groupe constitué par l'hydroxypropylméthylcellulose, l'hydroxypropylcellulose, la carboxyméthylcellulose, les dérivés de cellulose, les gommes, les alginates, les pectines, l'agar-agar, le carraghénane, l'amidon et les dérivés d'amidon.

20. Boisson selon la revendication 19, dans laquelle le polymère est de l'hydroxypropylméthylcellulose.

21. Boisson selon la revendication 19, dans laquelle le polymère est de la carboxyméthylcellulose.
